Europäisches Patentamt

European Patent Office

Office européen des brevets

(11) Veröffentlichungsnummer: **0 196 584**

**A1**

(12) # EUROPÄISCHE PATENTANMELDUNG

(21) Anmeldenummer: 86103986.5

(51) Int. Cl.⁴: **B 23 K 20/10**

(22) Anmeldetag: 24.03.86

(30) Priorität: 29.03.85 DE 3511629

(43) Veröffentlichungstag der Anmeldung:
08.10.86 Patentblatt 86/41

(84) Benannte Vertragsstaaten:
AT BE CH DE FR GB IT LI LU NL SE

(71) Anmelder: Schunk Ultraschalltechnik GmbH
Hauptstrasse 97 Postfach 1120
D-6301 Wettenberg 1(DE)

(72) Erfinder: Knapp, Herbert
Schubertstrasse 3
D-6107 Reinheim 1(DE)

(74) Vertreter: Stoffregen, Hans-Herbert, Dr.
Dipl.-Phys. et al,
Patentanwälte Strasse & Stoffregen Salzstrasse 11a
Postfach 2144
D-6450 Hanau/Main 1(DE)

(54) Vorrichtung zum Verbinden bzw. elektrischer Leiter.

(57) Es wird eine Vorrichtung beschrieben, mit der Metallteile wie elektrische Leiter mittels Ultraschall verbunden bzw. verdichtet werden. Hierzu wird ein Verdichtungsraum (26) zur Verfügung gestellt, der problemlos an den Durchmesser der Teile angepaßt werden kann. Der Verdichtungsraum (26) wird von gegenüberliegenden Abschnitten (18, 20) einer Sonotrode (10) und einem Gegenelement (12) sowie einem entlang des Sonotrodenabschnitts (18) verschiebbar angeordneten Begrenzungselement (19) und einem die Gegenelektrode (12) aufnehmenden Abstützelement (14) begrenzt. Dabei ist sichergestellt, daß die durch das Begrenzungselement (16) zur Verfügung gestellte Fläche (24) des Verdichtungsraumes (26) zu dem Gegenelement (12) stets einen definierten Abstand einhält.

Schunk Ultraschalltechnik GmbH
Hauptstraße 97
6301 Wettenberg 1

Vorrichtung zum Verbinden bzw. Verdichten elektrischer Leiter

Die Erfindung bezieht sich auf eine Vorrichtung zum Verbinden bzw. Verdichten von Metallteilen wie elektrischen Leitern vorzugsweise in Form von Litzen umfassend eine Schallschwingungen erzeugende Sonotrode mit dieser zugeordneter Gegenelektrode und einem Verdichtungsraum mit Begrenzungsflächen, die von Abschnitten der Sonotrode und der Gegenelektrode sowie einem parallel zu dem Abschnitt der Sonotrode verschiebbaren Begrenzungselement gebildet sind.

Der DE-A-31 51 151 ist eine stationär ausgebildete Vorrichtung zum Verbinden bzw. Verdichten elektrischer Leiter zu entnehmen, bei der der Verdichtungsraum in Bezug auf die Sonotrodenlängsachse außermittig und im Randbereich des Sonotrodenkopfes angeordnet ist. Dadurch bedingt wirken beim Schweißvorgang auf die Sonotrode nicht wünschenswerte Seitenkräfte.

In der nicht vorveröffentlichten Deutschen Patentanmeldung P 33 35 254.2 ist eine Vorrichtung der eingangs genannten Art beschrieben, bei der der Querschnitt des Verdichtungsraumes zwar variabel gewählt werden kann, jedoch konstruktiv bedingt darauf geachtet werden muß, daß die Gegenelektrode nicht durch das entlang der Sonotrode verschiebbar angeordnete Begrenzungselement behindert wird.

Aufgabe der vorliegenden Erfindung ist es, eine Vorrichtung der zuvor beschriebenen Art so auszubilden, daß mit konstruktiv einfachen Mitteln der Verdichtungsraum problemlos an die zu verbindenden bzw. zu verdichtenden elektrischen Leiter angepaßt werden kann, ohne daß die Gefahr besteht, daß die den Verdichtungsraum begrenzenden Flächen den Schweiß- bzw. den Verdichtungsprozeß behindern.

Die Aufgabe wird erfindungsgemäß dadurch gelöst, daß eine weitere (vierte) Begrenzungsfläche von einem lösbar mit der Gegenelektrode verbindbaren Abstützelement gebildet ist und daß der Abstand zwischen der vierten Begrenzungsfläche und der von dem Begrenzungselement gebildeten (dritte) Begrenzungsfläche automatisch auf die Erstreckung des wirksamen der Sonotrode zugeordneten Abschnitts der Gegenelektrode derart einstellbar ist, daß die Gegenelektrode entlang der dritten Begrenzungsfläche verschiebbar ist. Mit anderen Worten wird durch den erfindungsgemäßen Vorschlag sichergestellt, daß beim Bewegen der auch als Amboß oder Gegenelement zu bezeichnenden Gegenelektrode in Richtung auf die Sonotrode ein Kollidieren mit den seitlichen Begrenzungswänden des Verdichtungsraums nicht erfolgt, wobei die wirksame Fläche der Gegenelektrode, also die von dieser zur Verfügung gestellten Begrenzungsfläche des Verdichtungsraumes variiert werden kann, ohne daß ein zusätzliches Einstellen oder Verändern der weiteren seitlichen Begrenzungsflächen erforderlich ist.

In Ausgestaltung der Erfindung geht ein Distanzhalter von der Gegenelektrode mittelbar oder unmittelbar aus, der zur Einhaltung eines definierten Abstandes mittelbar oder unmittelbar mit dem Begrenzungselement wechselwirkt. Dabei erfolgt ein Zusammenwirken derart, daß das Begrenzungselement nur dann verschoben wird, wenn die Gegenelektrode eine parallel zu der von der Sonotrode zur Verfügung gestellten Begrenzungsfläche verlaufende Bewegungskomponente erfährt. Wird dagegen die Gegenelektrode senkrecht zu der Sonotrodenwirkfläche bewegt, also beim Einstellen der Höhe des Verdichtungsraumes oder beim Schweiß- bzw. Verdichtungsvorgang selbst, so verharrt das mit dem Distanzhalter wechselwirkende Begrenzungselement unverrückbar in seiner Position.

...

Während des Schweiß- bzw. Verdichtungsvorganges sind die Gegenelektrode und das Abstützelement z. B. durch Verriegeln miteinander verbunden, so daß die von der Gegenelektrode auf die Leiter einwirkende Kraft über das Abstützelement erzeugt wird.

Gegenelektrode und Abstützelement können dabei formschlüssig ineinandergreifen, um so ein problemloses Festlegen zu erzielen.

Ferner kann eine Gegenelektrode oder ein von diesem ausgehendes Element mit einem Anschlagelement wechselwirken, das vorzugsweise mit dem Abstützelement lösbar verbunden ist. Dabei kann das Anschlagelement derart mit der Gegenelektrode bzw. mit dem von diesem ausgehenden Element wechselwirken, daß die Höhe des Verdichtungsraumes vorgegeben wird, um die Hubbewegung der Gegenelektrode beim Schweiß- bzw. Verdichtungsvorgang sinnvoll zu begrenzen. Hierzu kann die Gegenelektrode eine stufenförmige in Bezug auf ihre Hubbewegung beim Schweiß- und Verdichtungsvorgang schräg verlaufende Ebene aufweisen, die zur Einstellung der Höhe des Verdichtungsraums mit dem Anschlagselement wechselwirkt. Wird die Gegenelektrode parallel zur Begrenzungsfläche der Sonotrode verschoben, so erfolgt eine Verbreitung des Verdichtungsraumes. Erfindungsgemäß wird im gleichen Maße das Begrenzungselement verschoben, damit die Elektrode beim Schweiß- bzw. Verdichtungsvorgang durch das Begrenzungselement nicht behindert wird. Dabei sind die freien aneinandergrenzenden Bereiche von Gegenelektrode und Begrenzungselement so aufeinander ausgerichtet, daß bei geschlossenem Verdichtungsraum deren Abstand minimal ist, um zu verhindern, daß die elektrischen Leiter während der Ultraschalleinwirkung seitlich aus dem Verdichtungsraum gleiten können.

Nach einem weiteren hervorzuhebenden Merkmal der Erfindung ist eine stufenlose Verstellung der Gegenelektrode derart durchführbar, daß die Höhe und Breite des Verdichtungsraumes in Abhängigkeit von den zu verbindenden bzw. zu verdichtenden elektrischen Leitern eingestellt werden kann. Hierzu wirkt eine schräg oder kurvenförmig zur Begrenzungsfläche der Sonotrode verlaufende Fläche des Anschlagselementes oder eines entsprechenden Elementes mit einer zugeordneten von der Gegenelektrode ausgehenden Schräge oder Stellkurve zusammen, um so bei einem

...

Verschieben entlang der aufeinandergleitenden Flächen die Gegenelektrode in Bezug auf die Sonotrode in Höhe und Wirklänge einzustellen. Mit anderen Worten kann z. B. durch die Steigung der Stellkurve der im Querschnitt Rechteckform aufweisende Verdichtungsraum auf die Metallteile genau eingestellt werden.

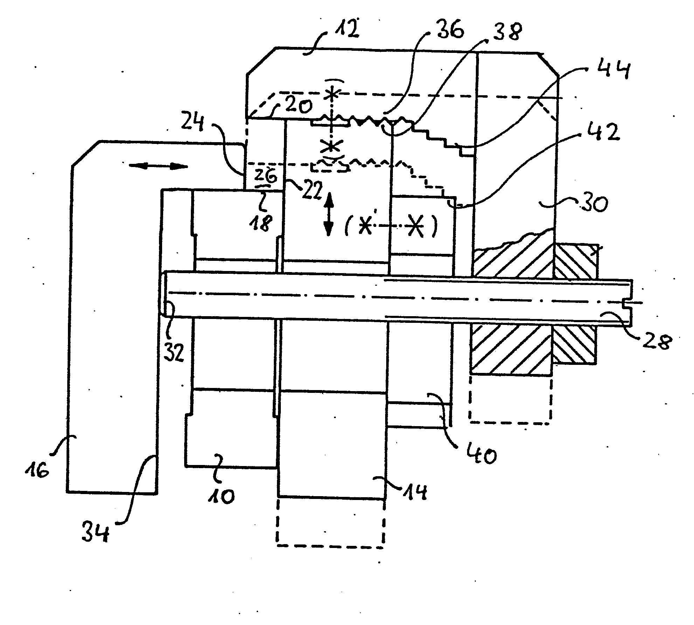

Weitere Einzelheiten, Vorteile und Merkmale der Erfindung ergeben sich aus der nachfolgenden Beschreibung eines in der Zeichnung dargestellten bevorzugten Ausführungsbeispiels.

Die in der einzigen Fig. wiedergegebenen schematische Darstellung einer erfindungsgemäßen Vorrichtung umfasst eine senkrecht zur Zeichenebene schwingende Sonotrode 10, einem dieser zugeordneten Gegenelement, das auch als Gegenelektrode 12 oder Amboß bezeichnet werden kann und lösbar von einem Abstützelement 14 aufgenommen ist, sowie ein Begrenzungselement 16. Diese Elemente stellen Begrenzungsflächen 18, 20, 22 und 24 für einen Verdichtungsraum 26 zur Verfügung, in den nicht dargestellte elektrischer Leiter wie Litzen eingebracht werden, um durch über die von der Sonotrode 10 übertragenen Ultraschallschwingungen verschweißt bzw. verdichtet zu werden. Damit die Gegenelektrode 12 beim Herabsenken, also Schließen des Verdichtungsraumes 26 durch den vorderen, die Begrenzungsfläche 24 aufweisenden Bereich des Begrenzungselementes 16 nicht behindert wird, ist erfindungsgemäß die Gegenelektrode 12 mit dem Begrenzungselement 16 über einen Distanzhalter 28 lösbar verbunden. Hierdurch soll erreicht werden, daß unabhängig von der Stellung des vorderen Endes 30 der Gegenelektrode 12 die Begrenzungsfläche 24 des Begrenzungselementes 16 hierzu einen konstanten, vorgebbaren Abstand einhält, so daß ein Bewegen entlang der Fläche 24 möglich ist (z. B. durch gestrichelte Darstellung angedeutet). Hierzu geht der Distanzhalter 28 von einem mit der Gegenelektrode 12 verbundenen oder einen Abschnitt von dieser bildenden Elemten 30 aus und wird mit seinem vorderen Ende 32 entlang einer parallel zur Verschiebebewegung des Abstützelementes 14 verlaufende Fläche 34 geführt, wobei auf das Begrenzungselement 16 stets eine Kraft in Richtung des Distanzhalter 28 wirkt. Dadurch ist sichergestellt, daß das Begrenzungselement 16 im gleichen Umfang eine parallel zur Begrenzungsfläche 18 der Sonotrode 10

...

verlaufende Bewegung wie die Gegenelektrode 12 vollführt, unabhängig davon, ob die Gegenelektrode gleichzeitig einer hierzu vertikal verlaufenden Bewegungskomponente unterworfen ist oder nicht.

Vorzugsweise wird die den Verdichtungsraum 26 verschließende bzw. diesen öffnende Hubbewegung der Gegenelektrode 12 über eine Wirkverbindung mit dem Abstützelement 14 hervorgerufen, d. h. durch Verklammerung oder ähnliches sind Elektrode und Abstützelement 14 fest miteinanderverbunden, damit die für den Schweiß- bzw. Verdichtungsvorgang von der Gegenelektrode 12 auf die elektrischen Leiter abzugebende Kraft durch das Abstützelement 14 hervorgerufen werden kann. Dadurch ist eine problemlose Lagerung der Gegenelektrode 12 und des Elementes 30, von dem der Distanzhalter 28 ausgeht, möglich.

Wie die Fig. desweiteren verdeutlicht, erfolgt zwischen Abstützelemt 14 und Gegenelektrode 12 ein Formschluß, um so ein einfaches Festlegen zu erzielen.

Dieser Formschluß wird durch in der dem Abstützelement 14 zugewandten Fläche 36 der Gegenelektrode vorhandene Erhebungen und Vertiefungen erzielt, die mit korrespondierenden Vertiefungen und Erhebungen der zugeordneten Fläche 38 des Abstützelementes wechselwirken. Dabei steht eine Anzahl von Erhebungen und Vertiefungen zur Verfügung, daß die Gegenelektrode 12 in Bezug auf das Abstützelement 14 einen mehr oder weniger großen Wirkbereich als Begrenzungsfläche 20 für den Verdichtungsraum 26 zur Verfügung stellt. Mit anderen Worten kann durch das Zusammenwirken der Flächen 36 und 38 im gewünschten Umfang die Breite des Verdichtungsraumes 28 eingestellt werden. Im gleichen Umfang wird erwähntermaßen das Begrenzungselement 16 mit der den Verdichtungraum 26 seitlich begrenzenden Fläche 24 verschoben.

Aber auch eine Höhenverstellung des Verdichtungsraumes 26 ist möglich. Hierzu kann ein Anschlagelement 40 höhenverstellbar zu dem Abstützelement 14 angeordnet sein, um mit einem Randbereich 42 mit einer Stufen aufweisenden Schräge 44 wechselzuwirken, die von der Fläche 36 der Gegenelektrode 12 ausgeht. Selbstverständlich ist in diesem Fall das Abstützelement 14 von der Gegenelektrode 12 gelöst. Je nach Lage des

...

Anschlagelementes 40 und je nachdem, welche der Stufen der Schräge 40 mit der Kante 42 wechselwirkt, wird die Höhe und gegebenenfalls auch die Breite des Verdichtungsraumes 26 eingestellt, wobei eine möglichst gute Anpassung an die in den Verdichtungsraum 26 einzubringenden elektrischen leiter gewünscht wird.

In der Fig. ist in gestrichelter Darstellung eine Position dargestellt, in der eine Stufe der Schräge 44 mit der Kante 42 des Anschlagselementes 40 wechselwirkt und im Vergleich zu der ausgezogenen Darstellung einen Verdichtungsraum 26 geringerer Höhe zur Verfügung stellt.

Sobald der Verdichtungsraum 26 in seinem Querschnitt eingestellt ist, kann das Abstützelement 14 mit der Gegenelektrode 12 und dem Anschlagelement 40 verbunden werden.

Alternativ besteht die Möglichkeit, eine stufenlose Veränderbarkeit des Verdichtungsraumes 26 zu erreichen. Hierzu geht von der Gegenelektrode 12 eine in Bezug auf ihre Hubbewegung schräg verlaufende Fläche oder z. B. Stellkurve aus, die mit einem eine Fläche komplementärer Geometrie ausweisenden Element wechselwirkt, um so bei Verschieben der Flächen aufeinander die Höhe und auch den Abstand des vorderen freien Endes 30 der Gegenelektrode 12 zu dem Anschlagselement 14 und der Sonotrode 10, zu verändern. Dabei kann so vorgegangen werden, daß zunächst ein Verdichtungsraum maximalen Querschnitts vorgegeben wird, in den zu verbindende bzw. zu verdichtende Metallelemente wie elektrische Leiter eingebracht werden. Sodann wird die Gegenelektrode 12 entlang der Schrägen bewegt, bis sich ein Widerstand aufbaut, der grundsätzlich durch Wechselwirken der Begrenzungsfläche 24 mit den eingebrachten elektrischen Leitern hervorgerufen wird. Dadurch ist eine in Bezug auf die Leiter optimale Breite des Verdichtungsraumes 26 vorgegeben. Sodann kann durch Entkoppeln der Schrägen und anschließendes Verbinden von Abstützelement 14 und Gegenelektrode 12 der Arbeitshub durchgeführt werden, um so den Verdichtungsraum 26 von oben her zu schließen und den Schweiß- bzw. Verdichtungsprozeß bei in Schwingungen versetzter Sonotrode durchzuführen. (Hier sei erwähnt, daß zum Einlegen bzw. Entfernen der Metallteile das Begrenzungselement 16 von dem Distanzhalter 28 weggezogen wird, um den Verdichtungsraum 26 zu öffnen. Danach wird

...

das Begrenzungselement 16 auf die Metallteile zu bewegt, bis die Fläche 34 den Distanzhalter 28 berührt. Sodann erfolgt der Arbeitshub des Gegenelementes 12 und die Sonotrode 10 wird in Schwingung versetzt.)

Durch die erfindungsgemäße Vorrichtung wird demzufolge die Möglichkeit geschaffen, problemlos elektrische Leiter unterschiedlicher Querschnitte miteinander zu verbinden, wobei eine Anpassung des Verdichtungsraumes auf die unterschiedlichen Querschnitte ohne konstruktiven Aufwand möglich ist, wobei gleichzeitig sichergestellt ist, daß die einzelnen den Verdichtungsraum begrenzenden Flächen während des Schweiß- bzw. Verdichtungsprozesses nicht zu einer gegenseitigen Behinderung führen. Dies wird dadurch erreicht, daß zwei aneinandergrenzende einen rechten Winkel einschließende Begrenzungsflächen des Verdichtungsraumes von einem Abschnitt der Gegenelektrode und einen den Hub hervorrufenden Abstützelement, das entlang der Seitenfläche der Sonotrode verschiebbar ist, eine weitere untere Begrenzungsfläche von einem Abschnitt der Sonotrode selbst und die verbleibende vierte Begrenzungsfläche von einem parallel und entlang der wirksamen Sonotrodenfläche verschiebbar angeordneten Begrenzungselement zur Verfügung gestellt werden, die in Bezug auf die wirksame Fläche der Gegenelektrode stets eine definierte geometrische Zuordnung aufweist.

0196584

Schunk Ultraschalltechnik GmbH
Hauptstraße 97
6301 Wettenberg 1

Patentansprüche

1. Vorrichtung zum Verbinden bzw. Verdichten von Metallteilen wie elektrischen Leitern vorzugsweise in Form von Litzen umfassend eine Ultraschallschwingungen erzeugende Sonotrode mit dieser zugeordneter Gegenelektrode und einen Verdichtungsraum mit Begrenzungsflächen, die von Abschnitten der Sonotrode und der Gegenelektrode sowie einem parallel zu dem Abschnitt der Sonotrode verschiebbaren Begrenzungselement gebildet sind,

d a d u r c h   g e k e n n z e i c h n e t,

daß eine weitere (vierte) Begrenzungsfläche (22) von einem lösbar mit der Gegenelektrode (12) verbindbaren Abstützelement (14) gebildet ist und daß der Abstand zwischen der vierten Begrenzungsfläche (22) und der von dem Begrenzungselement (16) gebildeten dritten Begrenzungsfläche (24) automatisch auf die Erstreckung des wirksamen der Sonotrode (10) zugeordneten Abschnitts der Gegenelektrode derart einstellbar ist,   daß die Gegenelektrode entlang der dritten Begrenzungsfläche (24) verschiebbar ist.

2. Vorrichtung nach Anspruch 1,

d a d u r c h   g e k e n n z e i c h n e t,

daß ein Distanzhalter (28) von der Gegenelektrode (12) mittelbar oder unmittelbar ausgeht,   der zur Einhaltung eines definierten Abstands mittelbar oder unmittelbar mit dem Begrenzungselement (16) wechselwirkt.

3. Vorrichtung nach Anspruch 1,

d a d u r c h   g e k e n n z e i c h n e t,

daß sowohl der wirksame dem Sonotrodenabschnitt (20) zugeordnete die zweite Begrenzungsfläche (20) des Verdichtungsraumes (26) bildende Abschnitt der Gegenelektrode (12) als auch der Abstand zwischen diesen in Abhängigkeit auf die zu verbindenden bzw. zu verdichtenden Leitern einstellbar ist.

4. Vorrichtung nach Anspruch 1 oder Anspruch 3,

d a d u r c h   g e k e n n z e i c h n e t,

daß zur Ausrichtung des wirksamen Abschnittes der Gegenelektrode (12) auf die Sonotrode (10) die Gegenelektrode oder ein von dieser ausgehendes Element entlang einer Fläche (38) des Abstützelementes (14) verschiebbar angeordnet ist.

5. Vorrichtung nach Anspruch 1,

d a d u r c h   g e k e n n z e i c h n e t,

daß das Abstützelement (14) lösbar mit einem Anschlagelement (40) verbunden ist, mit dem die Gegenelektrode (12) unmittelbar oder mittelbar zur Einstellung des Verdichtungsraumquerschnitts wechselwirkt.

6. Vorrichtung nach Anspruch 5,

d a d u r c h   g e k e n n z e i c h n e t,

daß die Gegenelektrode (12) oder ein von dieser ausgehendes Element eine zu der für den Schweiß- bzw. Verdichtungsvorgang erforderlichen Bewegungsrichtung schräg, z. B. kurvenförmig verlaufende Fläche (44) aufweist, die zur Einstellung der Höhe und gegebenenfalls der Breite des Verdichtungsraumes (26) mit dem Anschlagelement (40) wechselwirkt.

7. Vorrichtung nach Anspruch 1,

d a d u r c h   g e k e n n z e i c h n e t,

daß die Gegenelektrode (12) oder ein von dieser ausgehendes Element eine in Bezug auf die für den Schweiß- bzw. Verdichtungsvorgang erforderliche Bewegungsrichtung verlaufende Schräge, Stellkurve o. ä. aufweist, die entlang einer ihr zugeordneten Schräge, Stellkurve o. ä.

...

zur Einstellung der Höhe und Breite des Verdichtungsraumes (26) verschiebbar ist und daß nach Einstellung der Breite des Verdichtungsraumes (26) die Gegenelektrode (12) mit dem Abstützelement (14) verbindbar ist.

8. Vorrichtung nach Anspruch 2,
d a d u r c h   g e k e n n z e i c h n e t ,
daß der Distanzhalter (28) derart mit dem Begrenzungselement (16) wechselwirkt, daß dieses ausschließlich bei einer in Bezug auf die für den Schweiß- bzw. Verdichtungsprozeß erforderlichen Bewegungsrichtung der Gegenelektrode (12) senkrecht verlaufenden Bewegungskomponente entlang des der Gegenelektrode zugeordneten Abschnitts (18) der Sonotrode (10) verschiebbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|-----------|-----------|-----------|-----------|
| A | DE-A-3 316 873 (SCHUNK ULTRASCHALLTECHNIK) * Seite 12, Zeile 5 - Seite 14, Zeile 8; Abbildung 2 * | 1-3,8 | B 23 K 20/10 |
| | --- | | |
| P,D A | EP-A-0 143 936 (SCHUNK ULTRASCHALLTECHNIK) * Seite 2, Zeile 11 - Seite 3, Zeile 26; Seite 5, zeile 9 - Seite 6, Zeile 29; Abbildungen 1,2 * | 1-5 | |
| | --- | | |
| A,D | EP-A-0 083 707 (F.W. NIEBUHR) * Seite 2, Zeile 9 - Seite 3, Zeile 2; Seite 5, Zeile 31 - Seite 6, Zeile 23; Seite 7, Zeile 25 - Seite 8, Zeile 12; Abbildungen 1-5 * | 1 | |
| | ----- | | **RECHERCHIERTE SACHGEBIETE (Int. Cl 4)** B 23 K H 01 R |

Der vorliegende Recherchenbericht wurde fur alle Patentanspruche erstellt

| Recherchenort DEN HAAG | Abschlußdatum der Recherche 24-06-1986 | Prüfer ARAN D.D. |
|-----------|-----------|-----------|